# EUROPEAN PATENT SPECIFICATION

(11) **EP 4 379 924 B1**
(45) Date of publication and mention of the grant of the patent: **17.06.2026**
(21) Application number: 23807806.7
(22) Date of filing: 25.04.2023
(51) Int. Cl.: H01M 50/211, H01M 50/502, H01M 50/514, H01M 50/249, H01M 10/6554, H01M 50/507, H01M 10/613

(54) **BATTERY PACK AND VEHICLE INCLUDING THE SAME**
BATTERIEPACK UND FAHRZEUG DAMIT
BLOC-BATTERIE ET VÉHICULE LE COMPRENANT

(30) Priority: 16.05.2022 KR 20220059533
(43) Date of publication of application: 05.06.2024
(73) Proprietor: LG ENERGY SOLUTION, LTD., Seoul 07335 (KR)
(72) Inventor: CHO, Hyun-Young, Daejeon 34122 (KR); KIM, Yong-Il, Daejeon 34122 (KR)
(74) Representative: Hoffmann Eitle
(86) International application number: PCT/KR2023/005624
(87) International publication number: WO 2023/224283

(56) References cited:
- EP-A1- 3 907 818
- EP-B1- 2 337 155
- DE-A1- 102010 033 793
- KR-A- 20170 056 976
- KR-A- 20170 056 976
- KR-A- 20170 057 740
- KR-A- 20170 135 479
- KR-A- 20190 071 454
- KR-A- 20210 114 670

## Description

### TECHNICAL FIELD

The present disclosure relates to a battery pack according to the preamble of claim 1 and a vehicle including the same, and more particularly, to a battery pack having a simpler and more stable structure than a conventional battery pack and a vehicle including the same. Such a battery pack is known from EP 3 907 818 A1.

The present application claims priority to Korean Patent Application No. 10-2022-0059533 filed on May 16, 2022 in the Republic of Korea.

### BACKGROUND ART

As the demand for portable electronic products such as laptops, video cameras, and mobile phones has rapidly increased in recent years and the development of electric vehicles, energy storage batteries, robots, and satellites has begun in earnest, research on high-performance secondary batteries capable of repeated charge/discharge has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus have advantages of free charge/discharge, very low self-discharge rate, and high energy density.

A lithium secondary battery mainly uses a lithium-based oxide and a carbon material as a positive electrode active material and a negative electrode active material, respectively. In addition, the lithium secondary battery includes an electrode assembly in which a positive electrode plate and a negative electrode plate coated with the positive electrode active material and the negative electrode active material, respectively are disposed with a separator interposed therebetween, and a casing for sealing and accommodating the electrode assembly along with an electrolyte.

Additionally, depending on the shape of the battery case, lithium secondary batteries may be classified into a can-type secondary battery in which an electrode assembly is embedded in a metal can, and a pouch-type secondary battery in which an electrode assembly is embedded in a pouch of an aluminum laminate sheet. In addition, the can-type secondary battery can be further classified into a cylindrical battery and a prismatic battery according to the shape of the metal can.

Here, the pouch of the pouch-type secondary battery can be largely classified into a lower sheet and an upper sheet covering it. At this time, an electrode assembly formed by stacking and winding a positive electrode, a negative electrode, and a separator is stored in the pouch. In addition, after receiving the electrode assembly, the edges of the upper sheet and the lower sheet are sealed by thermal fusion or the like. In addition, an electrode tab drawn out from each electrode may be coupled to an electrode lead, and an insulating film may be added to a portion of the electrode lead in contact with the sealing portion.

In this way, the pouch-type secondary battery can have the flexibility to be configured in various forms. In addition, the pouch-type secondary battery has the advantage of being able to implement a secondary battery of the same capacity with a smaller volume and mass.

On the other hand, since the conventional pouch-type secondary battery surrounds the electrode assembly by a very thin pouch, the overall shape of the battery cell can be bent even by a slight external force and its own weight. Also, in the conventional pouch-type secondary battery, the electrode lead is flexible and can be easily bent. Therefore, it is not easy to mount the conventional pouch-type secondary battery directly to the battery pack without a module case structure that maintains the external appearance of the battery cell.

### DISCLOSURE

### Technical Problem

The present disclosure aims to provide a structure of a battery pack capable of mounting a cell assembly including a plurality of battery cells to the battery pack without a modular frame.

However, the technical problem to be solved by the present disclosure is not limited to the above-mentioned problem, and other problems not mentioned will be clearly understood by those skilled in the art from the present disclosure described below.

### Technical Solution

The present invention is defined by the battery pack according to independent claim 1. Other preferred features are recited in the dependent claims. A battery pack according to the present invention to accomplish the above object comprises a cell assembly including a plurality of battery cells having electrode leads, a pack housing for accommodating the cell assembly therein, and a bus bar assembly disposed on both sides of the cell assembly, coupled to the pack housing, and connected to the electrode leads of the plurality of battery cells.

Preferably, the plurality of battery cells may be stacked in front and rear directions and coupled to each other through an adhesive member respectively provided between the battery cells.

The battery pack further comprises a pair of cell support parts coupled to the pack housing and configured to support both front and rear sides of the cell assembly.

The pack housing includes a floor frame, and a pair of guide rails provided on the floor frame, disposed on both sides of the cell assembly, and to which the bus bar assembly is coupled, and the cell support part is disposed between the pair of guide rails in left and right directions of the cell assembly so that both sides are coupled to the pair of guide rails.

Preferably, the pair of guide rails may be formed to extend along front and rear directions of the cell assembly on the floor frame.

The bus bar assembly includes a plurality of bus bar blocks coupled to the guide rail, and a plurality of bus bars provided on at least a part of the plurality of bus bar blocks and connected to the electrode leads of the plurality of battery cells in front and rear directions of the cell assembly, and the electrode leads of the plurality of battery cells are disposed between different bus bar blocks in the front and rear directions of the cell assembly, and the plurality of bus bar blocks are configured to interconnect the plurality of bus bars and the electrode leads of the plurality of battery cells by pressing in the front and rear directions of the cell assembly.

Preferably, the plurality of bus bars may be disposed along the front and rear directions of the cell assembly, and the plurality of bus bar blocks may be provided along the front and rear directions of the cell assembly on the guide rail.

Preferably, the bus bar block may include a first block, a second block disposed to face the first block in the front and rear directions of the cell assembly, and a pressing member disposed between the first block and the second block in the front and rear directions of the cell assembly and configured to be driven in upper and lower directions to press the first block and the second block in the front and rear directions of the cell assembly, and lower ends of the first block, the second block and the pressing member may be located inside the guide rail.

Preferably, the pressing member may include a vertical movable part configured to move in the upper and lower directions, and a tapered part coupled to an outer circumferential surface of the vertical movable part and formed to have a tapered shape in a downward direction, and the tapered part may be moved in the upper and lower directions together with the vertical movable part to press the first block and the second block in the front and rear directions of the cell assembly.

Preferably, the pressing member may further include a bus bar block fixing part located inside the guide rail, connected to the vertical movable part, and disposed between a lower end of the first block and a lower end of the second block in the front and rear directions of the cell assembly, and the bus bar block fixing part may be fastened to the vertical movable part to fix the bus bar block to the guide rail.

Preferably, the bus bar may be configured to surround a part of the bus bar block and be connected to the electrode lead by being pressed in the front and rear directions of the cell assembly according to the movement of the first block and the second block.

Preferably, the bus bar may include a seating portion disposed on top of the bus bar block, and lead connection parts formed to extend downward from both ends in the front and rear directions of the seating portion and disposed adjacent to front and rear surfaces of the first block and the second block, and the lead connection parts may be configured to be connected to the electrode leads of the plurality of battery cells by being pressed to both front and rear sides of the cell assembly according to the movement of the first block and the second block by the pressurization of the tapered part.

Preferably, the battery pack may further comprise a pair of side plates that connect the pair of cell support parts in the front and rear directions of the cell assembly and are disposed to face each other in left and right directions of the cell assembly.

Preferably, the battery pack may further comprise a heat dissipation member disposed between the cell assembly and the floor frame in upper and lower directions.

In addition, a vehicle according to another aspect of the present disclosure comprises at least one battery pack according to one aspect of the present disclosure as described above.

### Advantageous Effects

According to the present invention, it is possible to stably support the cell assembly through a bus bar assembly and a cell support part coupled to the pack housing without a module-type frame accommodating the cell assembly, and it is possible to simplify parts when manufacturing a battery pack.

In addition, since the connection between the electrode lead and the bus bar and the connection of the plurality of battery cells are made by pressurizing the bus bar block, a separate welding process is not required, and the output of the cell assembly can be easily changed as needed later.

In addition, various additional effects can be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing the overall shape of a battery pack according to an embodiment of the present disclosure by way of example.
FIG. 2 is a diagram schematically showing the battery pack of FIG. 1 from the above.
FIG. 3 is a diagram showing an exemplary shape and a manufacturing process of a cell assembly provided in the battery pack of FIG. 1.
FIG. 4 is a diagram showing the part A of FIG. 2 in detail.
FIG. 5 and 6 are diagrams of the configuration of FIG. 4 viewed from the front and rear directions.
FIG. 7 is a diagram showing the overall shape of the bus bar assembly provided in the battery pack of FIG. 1.
FIG. 8 is an exploded perspective view of the bus bar assembly of FIG. 7.
FIG. 9 is a diagram schematically showing an embodiment in which the bus bar assembly of FIG. 7 and the electrode lead of the cell assembly are connected in a lateral direction.
FIG. 10 is a diagram schematically showing an embodiment in which the bus bar assembly of FIG. 7 and the electrode lead of the cell assembly are connected in an upward direction.
FIG. 11 is a diagram schematically showing another embodiment in which the bus bar assembly of FIG. 7 and the electrode lead of the cell assembly are connected in a lateral direction.
FIG. 12 is a diagram schematically showing another embodiment in which the bus bar assembly of FIG. 7 and the electrode lead of the cell assembly are connected in an upward direction.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the claims.

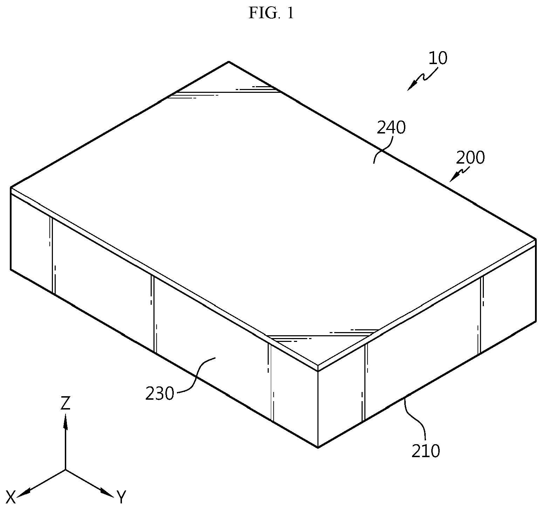

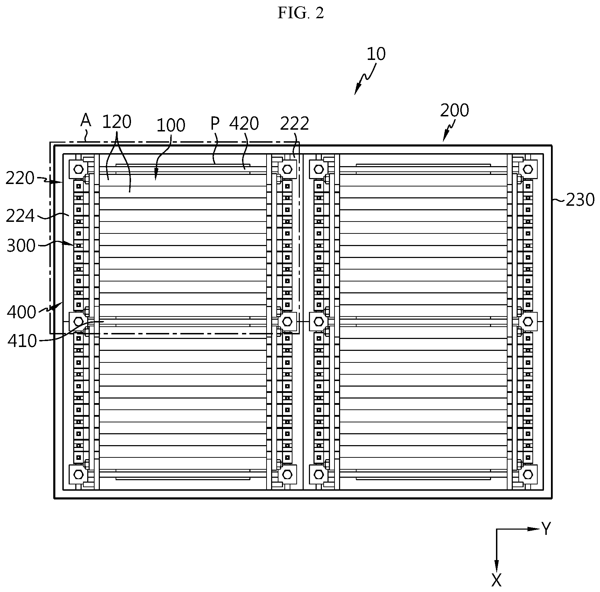

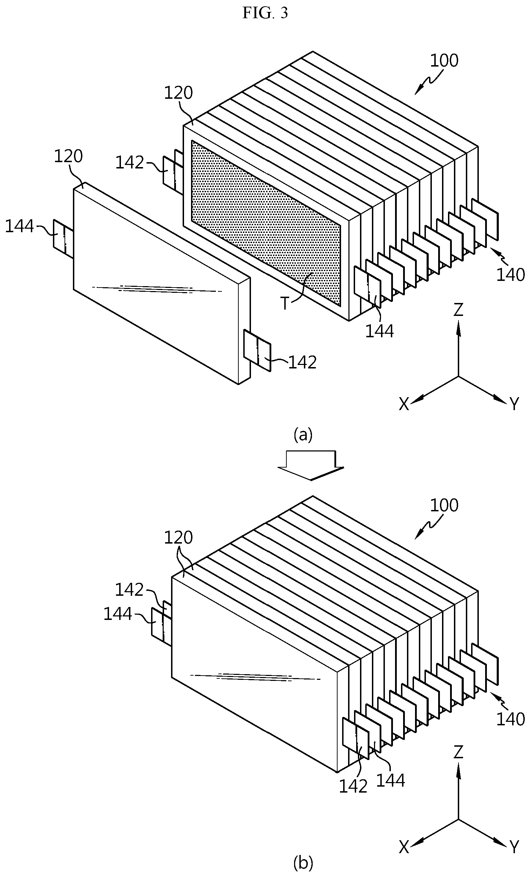

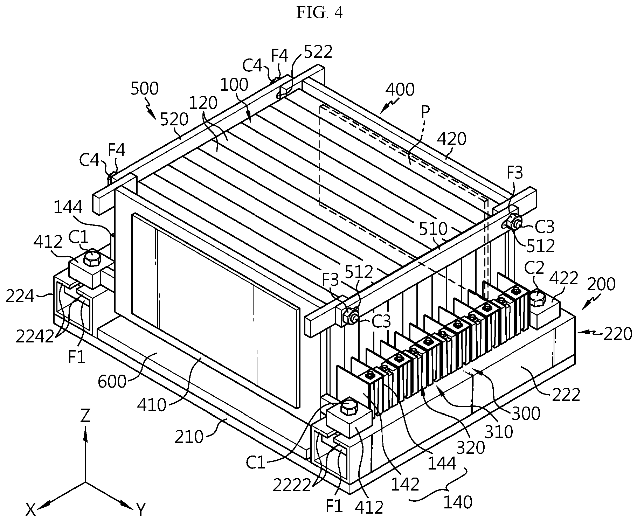

FIG. 1 is a diagram showing the overall shape of a battery pack 10 according to an embodiment of the present disclosure by way of example, FIG. 2 is a diagram schematically showing the battery pack 10 of FIG. 1 from the above, FIG. 3 is a diagram showing an exemplary shape and a manufacturing process of a cell assembly 100 provided in the battery pack 10 of FIG. 1, and FIG. 4 is a diagram showing the part A of FIG. 2 in detail. At this time, the illustration of a pack cover 240, a bus bar assembly 300, and a side plate 500 described later will be omitted in FIG. 2.

In an embodiment of the present disclosure, the X-axis direction shown in the drawings may mean front and rear directions, the Y-axis direction may mean left and right directions perpendicular to the X-axis direction on the horizontal plane (XY plane), and the Z-axis direction may mean upper and lower directions perpendicular to both the X-axis direction and the Y-axis direction.

Referring to FIGS. 1 to 4, the battery pack 10 according to the invention includes a cell assembly 100, a pack housing 200, and a bus bar assembly 300.

The cell assembly 100 includes a plurality of battery cells 120. The cell assembly 100 may not have a separate module case.

Here, each battery cell 120 may mean a secondary battery. Each battery cell 120 may be provided as a pouch-type battery cell, a cylindrical battery cell, or a prismatic battery cell. As an example, each battery cell 120 may be a pouch-type battery cell.

In addition, each battery cell 120 includes electrode leads 140. As an example, the electrode leads 140 may be formed on both left and right sides of each battery cell 120. In addition, the electrode lead 140 is mechanically and electrically connected to the bus bar assembly 300.

For example, the electrode lead 140 includes a first lead (142, e.g.: positive electrode lead) and a second lead (144, e.g.: negative electrode lead). The first lead 142 may be formed on one side of each battery cell 120 in the left and right directions, and the second lead 144 may be formed on the other side of each battery cell 120 in the left and right directions.

The pack housing 200 accommodates the cell assembly 100 therein. To this end, an accommodation space for accommodating the cell assembly 100 therein may be provided in the pack housing 200. The pack housing 200 will be explained in more detail in the related description below.

The bus bar assembly 300 is disposed on both sides of the cell assembly 100 and coupled to the pack housing 200. Also, the bus bar assembly 300 is connected to the electrode leads 140 of the plurality of battery cells 120.

Specifically, the bus bar assembly 300 may be disposed on both left and right sides of the cell assembly 100. The bus bar assembly 300 may be connected to the electrode leads 140 of the plurality of battery cells 120 in front and rear directions of the cell assembly 100.

Accordingly, the bus bar assembly 300 may support one side and the other side of the cell assembly 100 in the left and right directions. In addition, since the bus bar assembly 300 is connected to the electrode leads 140 of the plurality of battery cells 120 in the front and rear directions of the cell assembly 100, the cell assembly 100 can be stably supported in the front and rear directions by the bus bar assembly 300.

The bus bar assembly 300 will be explained in more detail in the following related description.

According to this embodiment of the present disclosure, since the cell assembly 100 can be stably accommodated inside the pack housing 200 through the bus bar assembly 300 coupled to the pack housing 200, the number of parts can be minimized in manufacturing the battery pack.

As exemplarily shown in FIG. 3, the plurality of battery cells 120 may be stacked and electrically connected to each other in front and rear directions.

As shown in (a) of FIG. 3, the plurality of battery cells 120 may be coupled to each other through an adhesive member T respectively provided between the battery cells 120. As an example, the adhesive member T may be a double-sided tape, but is not limited thereto.

The electrode lead 140 may be provided in plurality along the front and rear directions of the cell assembly 100 on both left and right sides of the cell assembly 100. That is, in the cell assembly 100 in which a plurality of battery cells 120 are stacked in the front and rear directions, when viewing the cell assembly 100 as a whole, a plurality of electrode leads 140 may be provided on both left and right sides of the cell assembly 100 along the front and rear directions of the cell assembly 100.

In addition, as shown in (b) of FIG. 3, when viewed in the front and rear directions of the cell assembly 100, the battery cells 120 may be stacked in the front and rear directions, so that the first leads 142 and the second leads 144 are alternately disposed.

According to the structure in which the plurality of battery cells 120 are stacked using the adhesive member T as described above, there is an advantage in that the cell assembly 100 accommodated in the pack housing 200 can be configured with a simpler structure.

Referring to FIGS. 2 and 4, the battery pack 10 further includes a pair of cell support parts 400.

The pair of cell support parts 400 are coupled to the pack housing 200 and are configured to support both front and rear sides of the cell assembly 100. As an example, the pair of cell support parts 400 may be configured in a plate shape.

Specifically, the pair of cell support parts 400 may include a first support part 410 and a second support part 420.

The first support part 410 may support one side of the cell assembly 100 in the front and rear directions, and the second support part 420 may support the other side of the cell assembly 100 in the front and rear directions. In particular, the first support part 410 may support the entire one side of the cell assembly 100 in the front and rear directions, and the second support part 420 may support the entire other side of the cell assembly 100 in the front and rear directions.

According to this embodiment of the present disclosure, stable support of the cell assembly 100 in the front and rear directions is possible through the pair of plate-shaped cell support parts 400, so that there is an advantage in that the cell assembly 100 can be more stably received inside the pack housing 200.

Hereinafter, the pack housing 200 and the bus bar assembly 300 described above will be described in more detail.

Referring to FIGS. 1 to 4, the pack housing 200 includes a floor frame 210 and a pair of guide rails 220.

The floor frame 210 may form a lower surface of the pack housing 200. As an example, the floor frame 210 may be formed in a plate shape having a predetermined thickness in upper and lower directions.

The pair of guide rails 220 are provided on the floor frame 210 and disposed on both sides of the cell assembly 100. Specifically, the pair of guide rails 220 may be disposed on both left and right sides of the cell assembly 100.

The pair of cell support parts 400 is disposed between the pair of guide rails 220 in the left and right directions of the cell assembly 100, and both sides are coupled to the pair of guide rails 220.

In this way, since both sides of the cell support part 400 are coupled to the pair of guide rails 220 provided on the floor frame 210, the cell assembly 100 can be more stably supported by the cell support part 400.

In addition, the above-described bus bar assembly 300 is coupled to the pair of guide rails 220.

In particular, the pair of guide rails 220 may be formed to extend along the front and rear directions of the cell assembly 100 on the floor frame 210.

Since the pair of guide rails 220 are formed to extend along the front and rear directions of the cell assembly 100 in this way, a plurality of bus bar assemblies 300 may be coupled to the guide rail 220. Accordingly, since more bus bar assemblies 300 can be connected to the electrode leads 140 of the plurality of battery cells 120, the cell assembly 100 can be more stably supported.

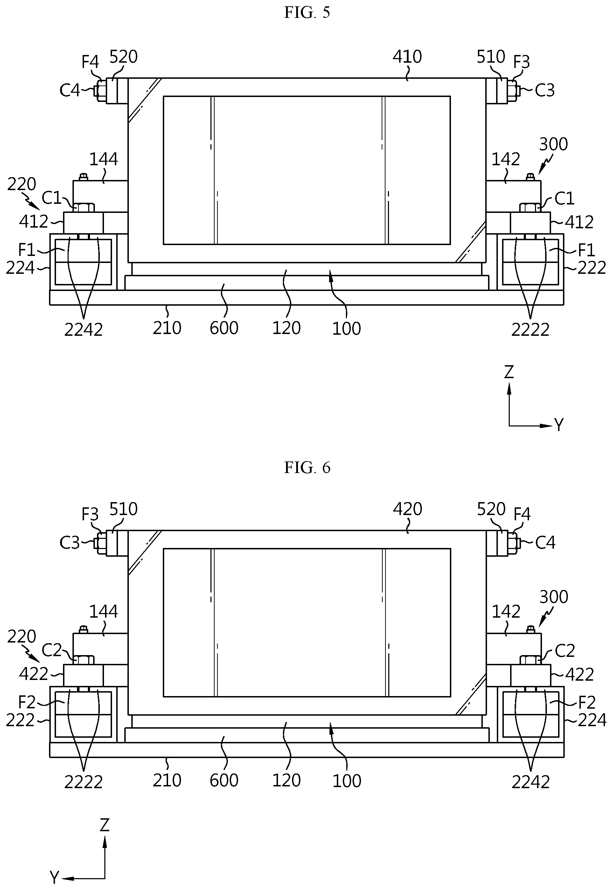

FIG. 5 and 6 are diagrams of the configuration of FIG. 4 viewed from the front and rear directions. In detail, FIG. 5 is a view of the configuration of FIG. 4 viewed from the front direction, and FIG. 6 is a view of the configuration of FIG. 4 viewed from the rear direction.

Referring to FIGS. 4 to 6, the pair of guide rails 220 described above may include a first rail 222 and a second rail 224.

The first rail 222 is disposed on one side of the cell assembly 100 in the left and right directions, and may be formed to extend along the front and rear directions of the cell assembly 100. At this time, the above-described bus bar assembly 300 may be coupled to the first rail 222.

The second rail 224 is disposed on the other side of the cell assembly 100 in the left and right directions, and may be formed to extend along the front and rear directions of the cell assembly 100. At this time, the above-described bus bar assembly 300 may be coupled to the second rail 224.

In one embodiment, the first rail 222 may be disposed on the left side of the cell assembly 100, and the second rail 224 may be disposed on the right side of the cell assembly 100, but is not limited thereto.

Referring to FIGS. 4 to 6, the battery pack 10 may further include a pair of first fastening members C1 and a pair of first cell support part fixing members F1.

The coupling of the first support part 410 to the guide rail 220 can be achieved by the pair of first fastening members C1 and the pair of first cell support part fixing members F1.

More specifically, the pair of first fastening members C1 may respectively pass through fastening holes 412 formed in both sides of the first support part 410 and be inserted into the first rail 222 and the second rail 224 in upper and lower directions, respectively.

The pair of first cell support part fixing members F1 are provided in the first rail 222 and second rail 224, respectively, and are combined with the first fastening member C1 to fix the first support part 410 to the first rail 222 and the second rail 224.

As an example, the first fastening member C1 may be a bolt, and the first cell support part fixing member F1 may be a corresponding square nut.

Meanwhile, the first rail 222 may include stepped portions 2222 protruding from both sides of the top of the first rail 222 and facing each other in the left and right directions of the cell assembly 100. The stepped portions 2222 of the first rail 222 may be formed to extend long along the front and rear directions of the cell assembly 100. In this case, the first fastening member C1 may be inserted into the first rail 222 through a gap between the stepped portions 2222 of the first rail 222.

When the first cell support part fixing member F1 provided in the first rail 222 is combined with the first fastening member C1, the stepped portion 2222 of the first rail 222 can come into contact with the first cell support part fixing member F1 in the upper and lower directions. Accordingly, the stepped portion 2222 of the first rail 222 may prevent the first cell support part fixing member F1 from leaving.

In addition, the second rail 224 may include stepped portions 2242 protruding from both sides of the top of the second rail 224 and facing each other in left and right directions of the cell assembly 100. The stepped portions 2242 of the second rail 224 may be formed to extend long along the front and rear directions of the cell assembly 100. In this case, the first fastening member C1 may be inserted into the second rail 224 through a gap between the stepped portions 2242 of the second rail 224.

The stepped portion 2242 of the second rail 224 may come into contact with the first cell support part fixing member F1 in the upper and lower directions when the first cell support part fixing member F1 provided in the second rail 224 is combined with the first fastening member C1. Accordingly, the stepped portion 2242 of the second rail 224 may prevent the first cell support part fixing member F1 from leaving.

Referring to FIGS. 4 to 6, the battery pack 10 may further include a pair of second fastening members C2 and a pair of second cell support part fixing members F2.

The coupling of the second support part 420 to the guide rail 220 can be achieved by the pair of second fastening members C2 and the pair of second cell support part fixing members F2.

More specifically, the pair of second fastening members C2 may pass through fastening holes 422 formed in both sides of the second support part 420 and be inserted into the first rail 222 and the second rail 224 in upper and lower directions, respectively.

The pair of second cell support part fixing members F2 are provided in the first rail 222 and second rail 224, respectively, and may be combined with the second fastening member C2 to fix the second support part 420 to the first rail 222 and the second rail 224.

As an example, the second fastening member C2 may be a bolt, and the second cell support part fixing member F2 may be a corresponding square nut.

The second fastening member C2 may be inserted into the first rail 222 through a gap between the stepped portions 2222 of the first rail 222.

On the other hand, when the second cell support part fixing member F2 provided in the first rail 222 is combined with the second fastening member C2, the stepped portion 2222 of the first rail 222 may come into contact with the second cell support part fixing member F2 in the upper and lower directions. Accordingly, the stepped portion 2222 of the first rail 222 may prevent the second cell support part fixing member F2 from leaving.

Also, the second fastening member C2 may be inserted into the second rail 224 through a gap between the stepped portions 2242 of the second rail 224.

On the other hand, when the second cell support part fixing member F2 provided in the second rail 224 is combined with the second fastening member C2, the stepped portion 2242 of the second rail 224 may come into contact with the second cell support part fixing member F2 in the upper and lower directions. Accordingly, the stepped portion 2242 of the second rail 224 may prevent the second cell support part fixing member F2 from leaving.

Referring to FIG. 4, the battery pack 10 may further include a buffer pad P to prevent swelling of the cell assembly 100.

The buffer pad P may be disposed between the cell assembly 100 and the cell support part 400 in the front and rear directions of the cell assembly 100.

As an example, the buffer pad P may be disposed between one side of the cell assembly 100 in the front and rear direction and the first support part 410 and between the other side of the cell assembly 100 in the front and rear direction and the second support part 420.

The buffer pad P can suppress the swelling phenomenon of the cell assembly 100 together with the pair of cell support parts 400. As an example, the buffer pad P may be made of a material having elasticity such as a sponge to enable contraction.

Hereinafter, the aforementioned bus bar assembly 300 will be described in more detail.

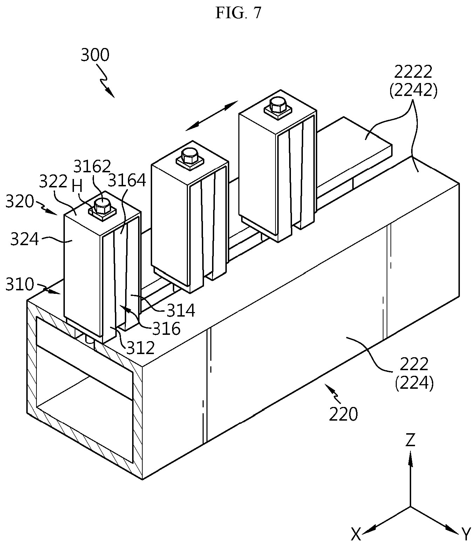

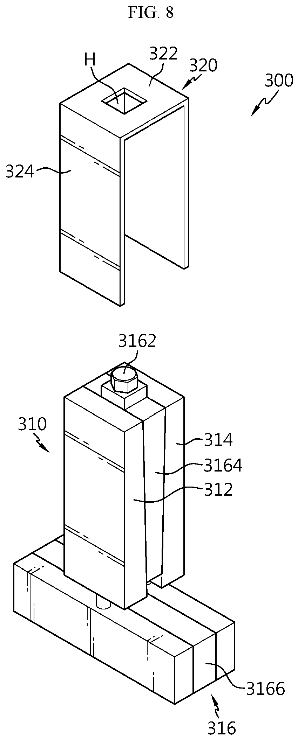

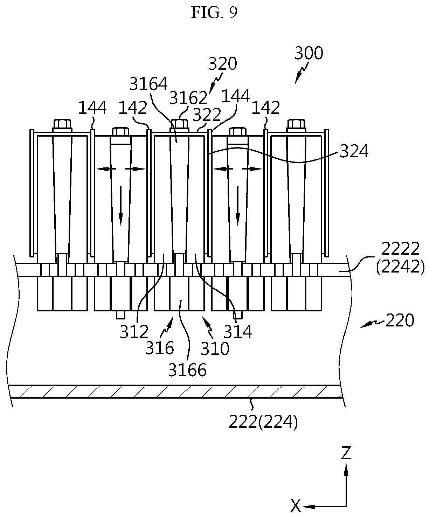

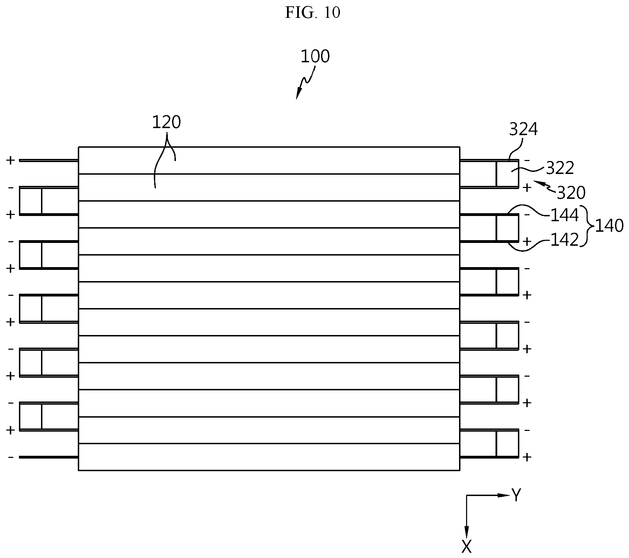

FIG. 7 is a diagram showing the overall shape of the bus bar assembly 300 provided in the battery pack 10 of FIG. 1, FIG. 8 is an exploded perspective view of the bus bar assembly 300 of FIG. 7, FIG. 9 is a diagram schematically showing an embodiment in which the bus bar assembly 300 of FIG. 7 and the electrode lead 140 of the cell assembly 100 are connected in a lateral direction, and FIG. 10 is a diagram schematically showing an embodiment in which the bus bar assembly 300 of FIG. 7 and the electrode lead 140 of the cell assembly 100 are connected in an upward direction. At this time, detailed illustration of the bus bar block 310 to be described later will be omitted in FIG. 10.

Referring to FIGS. 2 to 10, the bus bar assembly 300 includes a plurality of bus bar blocks 310 and a plurality of bus bars 320.

The plurality of bus bar blocks 310 is coupled to the guide rail 220. In this case, the plurality of bus bar blocks 310 may be coupled to the guide rail 220 in upper and lower directions.

The plurality of bus bars 320 is provided on at least a part of the plurality of bus bar blocks 310. Also, the plurality of bus bars 320 is connected to the electrode leads 140 of the plurality of battery cells 120 in front and rear directions of the cell assembly 100. In this case, the plurality of bus bars 320 may be coupled to the bus bar block 310 in upper and lower directions. As an example, the bus bar 320 may be made of a metallic material such as copper, silver, or tin plating having electrical conductivity.

More specifically, as shown in FIGS. 7 to 9, the electrode leads 140 of the plurality of battery cells 120 are disposed between different bus bar blocks 310 in front and rear directions of the cell assembly 100.

In this case, the plurality of bus bar blocks 310 are configured to interconnect the plurality of bus bars 320 and the electrode leads 140 of the plurality of battery cells 120 by pressing them in the front and rear directions of the cell assembly 100.

According to this embodiment of the present disclosure, the interconnection between the electrode lead 140 and the bus bar 320 can be stably achieved without a separate fixing structure by the pressurization of the plurality of bus bar blocks 310, and also the cell assembly 100 can be supported more stably by the bus bar assembly 300.

Meanwhile, the plurality of bus bars 320 may be disposed along the front and rear directions of the cell assembly 100. Also, the plurality of bus bar blocks 310 may be provided along the front and rear directions of the cell assembly 100 on the guide rail 220. As an example, a plurality of bus bar blocks 310 may be inserted into the guide rail 220 through front and rear ends of the guide rail 220 in a sliding manner.

According to this configuration, since interconnection between the electrode lead 140 and the bus bar 320 can be made by more bus bar blocks 310, the cell assembly 100 can be supported more stably.

Referring again to FIGS. 2 to 10, the bus bar block 310 may include a first block 312, a second block 314, and a pressing member 316.

The first block 312 and the second block 314 may be disposed to face each other in the front and rear directions of the cell assembly 100. As an example, the first block 312 and the second block 314 may be non-conductive, but are not limited thereto.

The pressing member 316 may be disposed between the first block 312 and the second block 314 in the front and rear directions of the cell assembly 100. Also, the pressing member 316 may be driven in the upper and lower directions to press the first block 312 and the second block 314 in the front and rear directions of the cell assembly 100. In this case, the pressing member 316 may be formed in a shape corresponding to the side surfaces of the first block 312 and the second block 314.

Also, the lower ends of the first block 312, the second block 314, and the pressing member 316 may be located inside the guide rail 220.

According to this embodiment of the present disclosure, since the first block 312 and the second block 314 can be pressed only by driving the pressing member 316 in the upper and lower directions, the interconnection between the electrode lead 140 and the bus bar 320 can be achieved with a simple structure.

Referring back to FIGS. 7 to 9, the pressing member 316 may include a vertical movable part 3162 and a tapered part 3164.

The vertical movable part 3162 may be configured to move in upper and lower directions. As an example, the vertical movable part 3162 may be a bolt.

The tapered part 3164 is coupled to the outer circumferential surface of the vertical movable part 3162 and may have a tapered shape in a downward direction. As an example, the tapered part 3164 may be non-conductive, but is not limited thereto.

More specifically, the tapered part 3164 may be moved in upper and lower directions along with the vertical movable part 3162 to press the first block 312 and the second block 314 in the front and rear directions of the cell assembly 100.

This tapered part 3164 may be formed such that one of the front and rear sides (front side) is formed in a shape corresponding to the side surface of the first block 312, and the other of the front and rear sides (rear side) is formed in a shape corresponding to the side surface of the second block 314.

Therefore, when the tapered part 3164 is driven downward together according to the driving of the vertical movable part 3162, the tapered part 3164 may press the first block 312 and the second block 314 in the front and rear directions so as to widen the gap between the first block 312 and the second block 314 disposed on both front and rear sides of the tapered part 3164.

As described above, since the tapered part 3164 of the pressing member 316 has a tapered shape with a narrower width going downward, there is an advantage in that the first block 312 and the second block 314 can be pressed with a simpler structure.

Referring back to FIGS. 7 to 9, the pressing member 316 may further include a bus bar block fixing part 3166.

The bus bar block fixing part 3166 is located inside the guide rail 220 and connected to the vertical movable part 3162, and may be disposed between the lower end of the first block 312 and the lower end of the second block 314 in the front and rear directions of the cell assembly 100. As an example, the bus bar block fixing part 3166 may be a square nut corresponding to the vertical movable part 3162.

The bus bar block fixing part 3166 may be fastened to the vertical movable part 3162 to fix the bus bar block 310 to the guide rail 220.

More specifically, the lower end of the vertical movable part 3162 may be fastened with the bus bar block fixing part 3166 according to driving in upper and lower directions.

In this case, the vertical movable part 3162 may be inserted into the guide rail 220 through a gap between the stepped portions 2222, 2242 of the guide rail 220. In addition, when the bus bar block fixing part 3166 located inside the guide rail 220 is fastened with the vertical movable part 3162, the stepped portions 2222, 2242 of the guide rail 220 may come into contact with the bus bar block fixing part 3166 in the upper and lower directions to prevent the bus bar block fixing part 3166 from leaving.

More specifically, the vertical movable part 3162 may be inserted into the first rail 222 through a gap between the stepped portions 2222 of the first rail 222. In addition, when the bus bar block fixing part 3166 located inside the first rail 222 is fastened with the vertical movable part 3162, the stepped portion 2222 of the first rail 222 may come into contact with the bus bar block fixing part 3166 in the upper and lower directions to prevent the bus bar block fixing part 3166 from leaving.

Also, the vertical movable part 3162 may be inserted into the second rail 224 through a gap between the stepped portions 2242 of the second rail 224. In addition, when the bus bar block fixing part 3166 located inside the second rail 224 is fastened with the vertical movable part 3162, the stepped portion 2242 of the second rail 224 may come into contact with the bus bar block fixing part 3166 in the upper and lower directions to prevent the bus bar block fixing part 3166 from leaving.

In this way, the bus bar block 310 can be stably fixed to the guide rail 220 by the fastening structure of the vertical movable part 3162 and the bus bar block fixing part 3166.

The bus bar 320 may be configured to cover a part of the bus bar block 310. In addition, the bus bar 320 may be configured to be connected to the electrode lead 140 by being pressed in the front and rear directions of the cell assembly 100 according to the movement of the first block 312 and the second block 314.

In this way, since the bus bar 320 is pressurized by the movement of the first block 312 and the second block 314 while covering a part of the bus bar block 310, the interconnection between the electrode lead 140 and the bus bar 320 can be made in a more stable structure.

More specifically, the bus bar 320 may include a seating portion 322 and a lead connection part 324.

The seating portion 322 may be disposed on top of the bus bar block 310.

The seating portion 322 may include a hole H having a shape corresponding to the upper end of the tapered part 3164 at the center thereof. The hole H of the seating portion 322 may guide the arrangement of the tapered part 3164 of the seating portion 322. That is, the upper end of the tapered part 3164 may be inserted into the hole H of the seating portion 322.

The lead connection part 324 is formed to extend downward from both front and rear ends of the seating portion 322, and may be disposed adjacent to the side surfaces of the first block 312 and the second block 314 in the front and rear directions.

At this time, the lead connection part 324 may be pressurized to both the front and rear sides of the cell assembly 100 according to the movement of the first block 312 and the second block 314 by the pressurization of the tapered part 3164 to be connected to the electrode leads 140 of the plurality of battery cells 120.

In this way, in a state where the bus bar 320 is disposed on top of the bus bar block 310, since the lead connection part 324 disposed adjacent to the first block 312 and the second block 314 is pressed by the tapered part 3164 and adheres to the electrode lead 140, the interconnection between the electrode lead 140 and the bus bar 320 can be made more stably and more effectively.

As an example, in the case of a cell assembly 100 in which a plurality of battery cells 120 are stacked such that adjacent first leads 142 and second leads 144 are alternately disposed in the front and rear directions of the cell assembly 100 as shown in FIGS. 2 to 10, according to the pressurization of the tapered part 3164, bus bar blocks 310 equipped with the bus bar 320 among the plurality of bus bar blocks 310 disposed along the front and rear directions may press the lead connection part 324 of the bus bar 320 in both the front and rear directions. In addition, according to the pressurization of the tapered part 3164, among the bus bar blocks 310, bus bar blocks 310 not equipped with the bus bars 320 may pressurize the electrode lead 140 disposed between different bus bar blocks 310. That is, as shown in FIG. 9, according to pressurization by the downward movement of the tapered part 3164, as the gap between the first block 312 and the second block 314 widens, the bus bar blocks 310 not equipped with the bus bar 320 may press the electrode lead 140 disposed between different bar blocks 310 to be brought into close contact with the lead connection part 324 of the facing bus bar 320.

Accordingly, the bus bar 320 and the electrode lead 140 are pressurized in the front and rear directions of the cell assembly 100 by the plurality of bus bar blocks 310, so that the plurality of battery cells 120 having the electrode lead 140 can be stably connected.

Meanwhile, in the embodiment of the present disclosure, the bus bar 320 is illustrated as being provided only in a part of the bus bar block 310, but is not limited thereto, and the bus bar 320 may be provided in the entirety of the bus bar block 310.

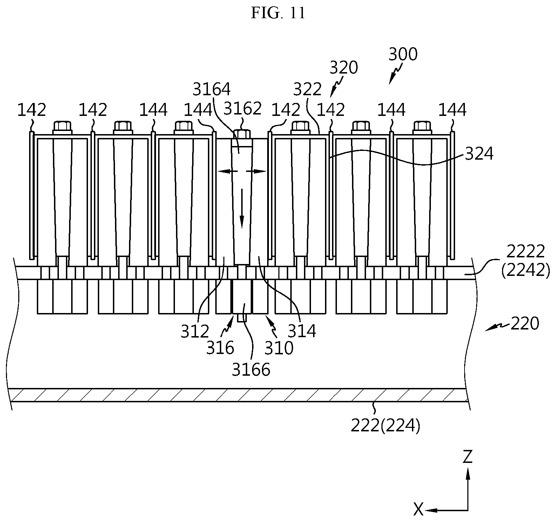

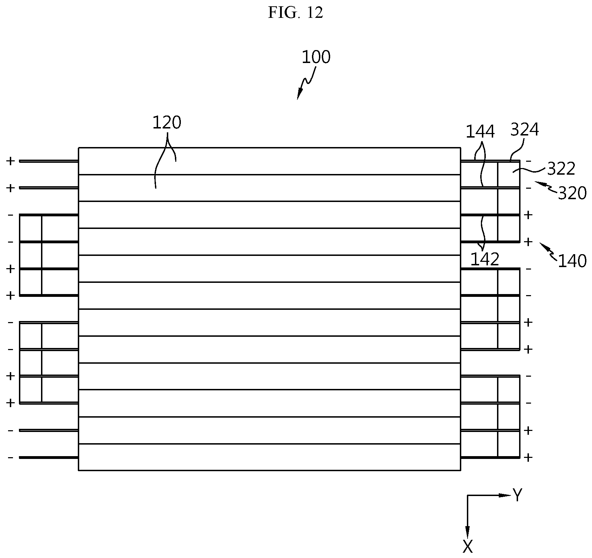

FIG. 11 is a diagram schematically showing another embodiment in which the bus bar assembly 300 of FIG. 7 and the electrode lead 140 of the cell assembly 100 are connected in a lateral direction, and FIG. 12 is a diagram schematically showing another embodiment in which the bus bar assembly 300 of FIG. 7 and the electrode lead 140 of the cell assembly 100 are connected in an upward direction. At this time, detailed illustration of the bus bar block 310 to be described later will be omitted in FIG. 11.

In the embodiment shown in FIGS. 11 and 12, in the cell assembly 100, a pair of battery cells 120 may have electrode leads 140 with the same polarity in front and rear directions.

Moreover, in the case of the embodiment shown in FIGS. 11 and 12, sets of a pair of battery cells 120 having electrode leads 140 of the same polarity in the front and rear directions may be stacked in the front and rear directions so as to be alternately arranged to have electrode leads 140 of different polarities.

More specifically, as shown in FIGS. 11 and 12, in the cell assembly 100, a set of a pair of battery cells 120 may have a first lead 142, and another set of a pair of battery cells 120 adjacent to the set of a pair of battery cells 120 having a first lead 142 in the front and rear directions may have a second lead 144. In this case, the set of a pair of battery cells 120 having the first lead 142 and the set of a pair of battery cells 120 having the second lead 144 may be alternately arranged in the front and rear directions of the cell assembly 100.

In this configuration, according to the pressurization of the tapered part 3164, among the plurality of bus bar blocks 310 arranged along the front and rear directions, the bus bar block 310 equipped with the bus bar 320 may press the lead connection part 324 of the bus bar 320 in both the front and rear directions. In addition, according to the pressurization of the tapered part 3164, among the bus bar blocks 310, the bus bar blocks 310 not equipped with the bus bar 320 may pressurize the electrode lead 140 disposed between different bus bar blocks 310.

Accordingly, the bus bar 320 and the electrode lead 140 can be pressed in the front and rear directions of the cell assembly 100 by the plurality of bus bar blocks 310, so that the sets of the pair of battery cells 120 can be stably connected.

Referring back to FIGS. 4 to 6, the battery pack 10 may further include a pair of side plates 500.

The pair of side plates 500 may connect the pair of cell support parts 400 in front and rear directions of the cell assembly 100. In addition, the pair of side plates 500 may be disposed to face each other in the left and right directions of the cell assembly 100.

That is, the pair of side plates 500 may connect the first support part 410 and the second support part 420 in the front and rear directions of the cell assembly 100. Also, the pair of side plates 500 may support the pair of cell support parts 400 in the left and right directions of the cell assembly 100.

With this configuration, the pair of cell support parts 400 can be stably connected in the front and rear directions of the cell assembly 100. Accordingly, the cell assembly 100 can be supported more stably by the pair of cell support parts 400.

Also, since the pair of side plates 500 can support the pair of cell support parts 400 on both sides, shaking of the cell assembly 100 in left and right directions can be suppressed.

More specifically, the pair of side plates 500 may include a first side plate 510 and a second side plate 520.

The first side plate 510 may connect the first support part 410 and the second support part 420. Also, the first side plate 510 may support one side of the first support part 410 and the second support part 420 in left and right directions.

The second side plate 520 is disposed to face the first site plate 510 in the left and right directions of the cell assembly 100, and may connect the first support part 410 and the second support part 420. Also, the second side plate 520 may support the other side of the first support part 410 and the second support part 420 in left and right directions.

As an example, the first side plate 510 may be disposed on the left side of the cell assembly 100, and the second side plate 520 may be disposed on the right side of the cell assembly 100, but are not limited thereto.

Referring to FIGS. 4 to 6, the battery pack 10 may further include a pair of third fastening members C3, a pair of third cell support part fixing members F3, a pair of fourth fastening members C4, and a pair of fourth cell support part fixing members F4.

The connections between the first support part 410 and the second support part 420 can be made by the pair of third fastening members C3, the pair of third cell support part fixing members F3, the pair of fourth fastening members C4 and the pair of fourth cell support part fixing members F4.

More specifically, the pair of third fastening members C3 may be formed on one side in the left and right directions of the first support part 410 and second support part 420, and disposed opposite to each other in the front and rear directions of the cell assembly 100.

In this case, the first side plate 510 may include a pair of long holes 512 formed to extend long in the front and rear directions of the cell assembly 100 and formed to face each other in the front and rear directions of the cell assembly 100.

The pair of third fastening members C3 may respectively pass through the pair of long holes 512 of the first side plate 510 in the left and right directions of the cell assembly 100.

The pair of third cell support part fixing members F3 can be combined with the pair of third fastening members C3 to fix the first side plate 510 to the first support part 410 and the second support part 420.

As an example, the third fastening member C3 may be a bolt, and the third cell support part fixing member F3 may be a nut having an arbitrary shape corresponding thereto.

In addition, the pair of fourth fastening members C4 may be formed on the other side in the left and right directions of the first support part 410 and the second support part 420, and may be disposed opposite to each other in the front and rear directions of the cell assembly 100.

In this case, the second side plate 520 may include a pair of long holes 522 formed to extend long in the front and rear directions of the cell assembly 100 and formed to face each other in the front and rear directions of the cell assembly 100.

The pair of fourth fastening members C4 may respectively pass through the pair of long holes 522 of the second side plate 520 in the left and right directions of the cell assembly 100.

The pair of fourth cell support part fixing members F4 may be combined with the pair of fourth fastening members C4 to fix the second side plate 520 to the first support part 410 and the second support part 420.

As an example, the fourth fastening member C4 may be a bolt, and the fourth cell support part fixing member F4 may be a nut having an arbitrary shape corresponding thereto.

Referring back to FIGS. 4 to 6, the battery pack 10 may further include a heat dissipation member 600.

The heat dissipation member 600 may be disposed between the cell assembly 100 and the floor frame 210 in the upper and lower directions. As an example, the heat dissipation member 600 may be made of a resin having good thermal conductivity, and may absorb heat emitted from the cell assembly 100 and dissipate the heat to the outside of the pack housing 200. That is, the heat emitted from the cell assembly 100 may be dissipated to the outside of the pack housing 200 via the heat dissipation member 600 and the floor frame 210.

In addition, the heat dissipation member 600 disposed between the cell assembly 100 and the floor frame 210 in the upper and lower directions may support the lower portion of the cell assembly 100.

Also, although not shown, the battery pack 10 may further include a cooling module disposed below the floor frame 210 or inside the floor frame 210 to enable cooling of the cell assembly 100. As an example, the cooling module may be a heat sink.

A brief description of the manufacturing process of the above-described battery pack 10 of the present disclosure is as follows.

First, a cell assembly 100 in which a plurality of battery cells 120 are stacked in front and rear directions is formed. At this time, at least one cell assembly 100 may be formed.

Next, the cell assembly 100 is placed between a pair of guide rails 220, and the bus bar assembly 300 is coupled to the guide rails 220.

Next, the plurality of battery cells 120 are interconnected by connecting the bus bar 320 and the electrode leads 140 in front and rear directions using the bus bar assembly 300.

Next, a pair of cell support parts 400 are placed on both front and rear sides of the cell assembly 100, and the pair of cell support parts 400 are coupled to the guide rail 220.

Finally, the pair of cell support parts 400 are connected through the pair of side plates 500.

According to this embodiment of the present disclosure, the cell assembly 100 may be stably accommodated inside the pack housing 200 through the bus bar assembly 300 and the cell support part 400 coupled to the pack housing 200.

Referring to FIGS. 1 and 2, the aforementioned pack housing 200 may further include a side frame 230 and a pack cover 240.

The side frame 230 may form a side of the pack housing 200.

The pack cover 240 may be coupled to an upper portion of the side frame 230. At this time, the pack cover 240 may cover the upper portion of the cell assembly 100 accommodated inside the pack housing 200.

In addition, at least one cell assembly 100 may be accommodated inside the pack housing 200 shown in FIG. 2, and the components such as the guide rail 220, the bus bar assembly 300, the pair of cell support parts 400, and the side plate 500 may be formed corresponding to the number of cell assemblies 100 accommodated inside the pack housing 200.

As described above, according to the embodiment of the present disclosure, the cell assembly 100 can be stably supported through the bus bar assembly 300 and the cell support part 400 coupled to the pack housing 200 without a modular frame accommodating the cell assembly 100, and also it is possible to simplify the parts at the time of manufacturing the battery pack 10.

In addition, since the connection between the electrode lead 140 and the bus bar 320 and the connection of the plurality of battery cells 120 are made by pressurization of the bus bar block 310, a separate welding process is not required, and the output of the cell assembly 100 can be adjusted easily as needed later.

On the other hand, the battery pack 10 according to the present disclosure may further include various devices for controlling the charging and discharging of the cell assembly 100, for example, a BMS (Battery Management System), a current sensor, and a fuse, in addition to the cell assembly 100, the pack housing 200, and the bus bar assembly 300.

In addition, the battery pack 10 according to the present disclosure may be applied to a vehicle such as an electric vehicle. That is, a vehicle according to the present disclosure may include at least one battery pack 10 according to the present disclosure.

The present disclosure has been described in detail. However, it should be understood that the detailed description and specific examples, while indicating preferred embodiments of the disclosure, are given by way of illustration only, since various changes and modifications within the scope of the claims will become apparent to those skilled in the art from this detailed description.

On the other hand, in the present disclosure, terms indicating directions such as up, down, left, right, front, and back are used, but these terms are only for convenience of explanation, it is obvious to those skilled in the art of the present disclosure that they may vary depending on the location of the target object or the location of the observer.

## Claims

1. A battery pack (10), comprising:
a cell assembly (100) including a plurality of battery cells (120) having electrode leads (140);
a pack housing (200) for accommodating the cell assembly (100) therein;
a bus bar assembly (300) disposed on both sides of the cell assembly (100), coupled to the pack housing (200), and connected to the electrode leads (140) of the plurality of battery cells (120); and
a pair of cell support parts (400) coupled to the pack housing (200) and configured to support both front and rear sides of the cell assembly (100),
wherein the pack housing (200) includes:
a floor frame (210); and
a pair of guide rails (220) provided on the floor frame (210), disposed on both sides of the cell assembly (100), and to which the bus bar assembly (300) is coupled,
wherein the cell support part (400) is disposed between the pair of guide rails (220) in left and right directions of the cell assembly (100) so that both sides are coupled to the pair of guide rails (220),
**characterised in that** the bus bar assembly (300) includes:
a plurality of bus bar blocks (310) coupled to the guide rail (220); and
a plurality of bus bars (320) provided on at least a part of the plurality of bus bar blocks (310) and connected to the electrode leads (140) of the plurality of battery cells (120) in front and rear directions of the cell assembly (100),
wherein the electrode leads (140) of the plurality of battery cells (120) are disposed between different bus bar blocks (310) in the front and rear directions of the cell assembly (100), and the plurality of bus bar blocks (310) are configured to interconnect the plurality of bus bars (320) and the electrode leads (140) of the plurality of battery cells (120) by pressing in the front and rear directions of the cell assembly (100).

2. The battery pack (10) according to claim 1, wherein the plurality of battery cells (120) are stacked in front and rear directions and coupled to each other through an adhesive member (T) respectively provided between the battery cells (120).

3. The battery pack (10) according to claim 1 or 2, wherein the pair of guide rails (220) are formed to extend along front and rear directions of the cell assembly (100) on the floor frame (210).

4. The battery pack (10) according to any one of claims 1-3, wherein the plurality of bus bars (320) are disposed along the front and rear directions of the cell assembly (100), and
wherein the plurality of bus bar blocks (310) are provided along the front and rear directions of the cell assembly (100) on the guide rail (220).

5. The battery pack (10) according to any one of claims 1-4, wherein the bus bar block (310) includes:
a first block (312);
a second block (314) disposed to face the first block (312) in the front and rear directions of the cell assembly (100); and
a pressing member (316) disposed between the first block (312) and the second block (314) in the front and rear directions of the cell assembly (100) and configured to be driven in upper and lower directions to press the first block (312) and the second block (314) in the front and rear directions of the cell assembly (100),
wherein lower ends of the first block (312), the second block (314) and the pressing member (316) are located inside the guide rail (220).

6. The battery pack (10) according to claim 5, wherein the pressing member (316) includes:
a vertical movable part (3162) configured to move in the upper and lower directions; and
a tapered part (3164) coupled to an outer circumferential surface of the vertical movable part (3162) and formed to have a tapered shape in a downward direction,
wherein the tapered part (3164) is moved in the upper and lower directions together with the vertical movable part (3162) to press the first block (312) and the second block (314) in the front and rear directions of the cell assembly (100).

7. The battery pack (10) according to claim 6, wherein the pressing member (316) further includes a bus bar block fixing part (3166) located inside the guide rail (220), connected to the vertical movable part (3162), and disposed between a lower end of the first block (312) and a lower end of the second block (314) in the front and rear directions of the cell assembly (100), and
wherein the bus bar block fixing part (3166) is fastened to the vertical movable part (3162) to fix the bus bar block (310) to the guide rail (220).

8. The battery pack (10) according to any one of claims 1-7,
wherein the bus bar (320) is configured to surround a part of the bus bar block (310) and be connected to the electrode lead (140) by being pressed in the front and rear directions of the cell assembly (100) according to the movement of the first block (312) and the second block (314).

9. The battery pack (10) according to claim 8, wherein the bus bar (320) includes:
a seating portion (322) disposed on top of the bus bar block (310); and
lead connection parts (324) formed to extend downward from both ends in the front and rear directions of the seating portion (322) and disposed adjacent to front and rear surfaces of the first block (312) and the second block (314),
wherein the lead connection parts are configured to be connected to the electrode leads (140) of the plurality of battery cells (120) by being pressed to both front and rear sides of the cell assembly (100) according to the movement of the first block (312) and the second block (314) by the pressurization of the tapered part (3164).

10. The battery pack (10) according to any one of claims 1-9, further comprising a pair of side plates (500) that connect the pair of cell support parts (400) in the front and rear directions of the cell assembly (100) and are disposed to face each other in left and right directions of the cell assembly (100).

11. The battery pack (10) according to any one of claims 1-10, further comprising a heat dissipation member (600) disposed between the cell assembly (100) and the floor frame (210) in upper and lower directions.

12. A vehicle comprising at least one battery pack (10) according to any one of claims 1 to 11.

## Patentansprüche

1. Batteriepack (10), umfassend:
eine Zellanordnung (100), einschließlich einer Vielzahl von Batteriezellen (120), die Elektrodenleitungen (140) aufweisen;
ein Packgehäuse (200) zum Aufnehmen der Zellanordnung (100) darin;
eine Sammelschienenanordnung (300), die an beiden Seiten der Zellanordnung (100) angeordnet ist, mit dem Packgehäuse (200) gekoppelt ist und mit den Elektrodenleitungen (140) der Vielzahl von Batteriezellen (120) verbunden ist; und
ein Paar Zellstützteile (400), die mit dem Packgehäuse (200) gekoppelt sind und ausgebildet sind, sowohl Vorder- als auch Rückseiten der Zellanordnung (100) zu stützen,
wobei das Packgehäuse (200) Folgendes einschließt:
einen Bodenrahmen (210); und
ein Paar Führungsschienen (220), das auf dem Bodenrahmen (210) bereitgestellt ist, an beiden Seiten der Zellanordnung (100) angeordnet ist, und an das die Sammelschienenanordnung (300) gekoppelt ist,
wobei das Zellstützelement (400) zwischen dem Paar Führungsschienen (220) in Links- und Rechtsrichtungen der Zellanordnung (100) so angeordnet ist, dass beide Seiten an das Paar Führungsschienen (220) gekoppelt sind,
**dadurch gekennzeichnet, dass** die Sammelschienenanordnung (300) Folgendes einschließt:
eine Vielzahl von Sammelschienenblöcken (310), die mit der Führungsschiene (220) gekoppelt sind; und
eine Vielzahl von Sammelschienen (320), die an zumindest einem Teil der Vielzahl von Sammelschienenblöcken (310) bereitgestellt sind und in Vorder- und Rückwärtsrichtungen der Zellanordnung (100) mit den Elektrodenleitungen (140) der Vielzahl von Batteriezellen (120) verbunden sind,
wobei die Elektrodenleitungen (140) der Vielzahl von Batteriezellen (120) zwischen verschiedenen Sammelschienenblöcken (310) in den Vorder- und Rückwärtsrichtungen der Zellanordnung (100) angeordnet sind, und die Vielzahl von Sammelschienenblöcken (310) ausgebildet ist, die Vielzahl von Sammelschienen (320) und die Elektrodenleitungen (140) der Vielzahl von Batteriezellen (120) durch Andrücken in den Vorder- und Rückwärtsrichtungen der Zellanordnung (100) miteinander zu verbinden.

2. Batteriepack (10) nach Anspruch 1, wobei die Vielzahl von Batteriezellen (120) in Vorder- und Rückwärtsrichtungen gestapelt und jeweils durch ein Klebeelement (T), das zwischen den Batteriezellen (120) bereitgestellt ist, miteinander gekoppelt sind.

3. Batteriepack (10) nach Anspruch 1 oder 2, wobei das Paar Führungsschienen (220) auf dem Bodenrahmen (210) so gebildet ist, dass es sich entlang von Vorder- und Rückwärtsrichtungen der Zellanordnung (100) erstreckt.

4. Batteriepack (10) nach einem der Ansprüche 1-3, wobei die Vielzahl von Sammelschienen (320) entlang der Vorder- und Rückwärtsrichtungen der Zellanordnung (100) angeordnet sind, und
wobei die Vielzahl von Sammelschienenblöcken (310) entlang der Vorder- und Rückwärtsrichtungen der Zellanordnung (100) auf der Führungsschiene (220) bereitgestellt sind.

5. Batteriepack (10) nach einem der Ansprüche 1-4, wobei der Sammelschienenblock (310) Folgendes einschließt:
einen ersten Block (312);
einen zweiten Block (314), der so angeordnet ist, dass er dem ersten Block (312) in den Vorder- und Rückwärtsrichtungen der Zellanordnung (100) gegenüberliegt; und
ein Andrückelement (316), das zwischen dem ersten Block (312) und dem zweiten Block (314) in den Vorder- und Rückwärtsrichtungen der Zellanordnung (100) angeordnet ist und ausgebildet ist, in oberen und unteren Richtungen angetrieben zu werden, um den ersten Block (312) und den zweiten Block (314) in den Vorder- und Rückwärtsrichtungen der Zellanordnung (100) anzudrücken,
wobei untere Enden des ersten Blocks (312), des zweiten Blocks (314) und des Andrückelements (316) innerhalb der Führungsschiene (220) angeordnet sind.

6. Batteriepack (10) nach Anspruch 5, wobei das Andrückelement (316) Folgendes einschließt:
einen vertikal beweglichen Teil (3162), der ausgebildet ist, sich in den oberen und unteren Richtungen zu bewegen; und
einen sich verjüngenden Teil (3164), der mit einer äußeren Umfangsoberfläche des vertikal beweglichen Teils (3162) gekoppelt ist und gebildet ist, eine sich verjüngende Form in einer Abwärtsrichtung aufzuweisen,
wobei der sich verjüngende Teil (3164) in den oberen und unteren Richtungen zusammen mit dem vertikal beweglichen Teil (3162) bewegt wird, um den ersten Block (312) und den zweiten Block (314) in den Vorder- und Rückwärtsrichtungen der Zellanordnung (100) anzudrücken.

7. Batteriepack (10) nach Anspruch 6, wobei das Andrückelement (316) weiter ein Sammelschienenblockfixierteil (3166) einschließt, das innerhalb der Führungsschiene (220) angeordnet ist, mit dem vertikal beweglichen Teil (3162) verbunden ist, und zwischen einem unteren Ende des ersten Blocks (312) und einem unteren Ende des zweiten Blocks (314) in den Vorder- und Rückwärtsrichtungen der Zellanordnung (100) angeordnet ist, und
wobei das Sammelschienenblockfixierteil (3166) an dem vertikal beweglichen Teil (3162) befestigt ist, um den Sammelschienenblock (310) an der Führungsschiene (220) zu fixieren.

8. Batteriepack (10) nach einem der Ansprüche 1-7,
wobei die Sammelschiene (320) ausgebildet ist, einen Teil des Sammelschienenblocks (310) zu umgeben und durch Andrücken in den Vorder- und Rückwärtsrichtungen der Zellanordnung (100) entsprechend der Bewegung des ersten Blocks (312) und des zweiten Blocks (314) mit der Elektrodenleitung (140) verbunden zu werden.

9. Batteriepack (10) nach Anspruch 8, wobei die Sammelschiene (320) einschließt:
einen Sitzabschnitt (322), der oben auf dem Sammelschienenblock (310) angeordnet ist; und
Leitungsanschlussteile (324), die gebildet sind, sich von beiden Enden in den Vorder- und Rückwärtsrichtungen des Sitzabschnitts (322) abwärts zu erstrecken und angrenzend an Vorder- und Rückflächen des ersten Blocks (312) und des zweiten Blocks (314) angeordnet sind,
wobei die Leitungsanschlussteile ausgebildet sind, mit den Elektrodenleitungen (140) der Vielzahl von Batteriezellen (120) verbunden zu werden, indem sie entsprechend der Bewegung des ersten Blocks (312) und des zweiten Blocks (314) durch die Druckbeaufschlagung des sich verjüngenden Teils (3164) an sowohl Vorder- als auch Rückseiten der Zellanordnung (100) angedrückt werden.

10. Batteriepack (10) nach einem der Ansprüche 1-9, das weiter ein Paar Seitenplatten (500) umfasst, die das Paar Zellstützteile (400) in den Vorder- und Rückwärtsrichtungen der Zellanordnung (100) verbinden und so angeordnet sind, dass sie einander in Links- und Rechtsrichtungen der Zellanordnung (100) gegenüberliegen.

11. Batteriepack (10) nach einem der Ansprüche 1-10, das weiter ein Wärmeableitungselement (600) umfasst, das zwischen der Zellanordnung (100) und dem Bodenrahmen (210) in oberen und unteren Richtungen angeordnet ist.

12. Fahrzeug, umfassend mindestens ein Batteriepack (10) nach einem der Ansprüche 1 bis 11.

## Revendications

1. Bloc-batterie (10), comprenant :
un ensemble (100) de cellules incluant une pluralité de cellules (120) de batterie présentant des fils (140) d'électrode ;
un boîtier (200) de bloc pour loger l'ensemble (100) de cellules dans celui-ci ;
un ensemble (300) de barres omnibus disposé sur les deux côtés de l'ensemble (100) de cellules, couplé au boîtier (200) de bloc, et relié aux fils (140) d'électrode de la pluralité de cellules (120) de batterie ; et
une paire de parties (400) de support de cellules couplées au boîtier (200) de bloc et configurées pour supporter à la fois le côté avant et le côté arrière de l'ensemble (100) de cellules,
dans lequel le boîtier (200) de bloc inclut :
un cadre (210) de plancher ; et
une paire de rails de guidage (220) prévus sur le cadre (210) de plancher, disposés sur les deux côtés de l'ensemble (100) de cellules et auxquels l'ensemble (300) de barres omnibus est couplé,
dans lequel la partie (400) de support de cellules est disposée entre la paire de rails de guidage (220) dans des directions gauche et droite de l'ensemble (100) de cellules de sorte que les deux côtés soient couplés à la paire de rails de guidage (220),
**caractérisé en ce que** l'ensemble (300) de barres omnibus inclut :
une pluralité de blocs (310) de barre omnibus couplés au rail de guidage (220) ; et
une pluralité de barres omnibus (320) prévues sur au moins une partie de la pluralité de blocs (310) de barre omnibus et reliées aux fils (140) d'électrode de la pluralité de cellules (120) de batterie dans des directions avant et arrière de l'ensemble (100) de cellules,
dans lequel les fils (140) d'électrode de la pluralité de cellules (120) de batterie sont disposés entre différents blocs (310) de barre omnibus dans les directions avant et arrière de l'ensemble (100) de cellules, et la pluralité de blocs (310) de barre omnibus sont configurés pour interconnecter la pluralité de barres omnibus (320) et les fils (140) d'électrode de la pluralité de cellules (120) de batterie par pression dans les directions avant et arrière de l'ensemble (100) de cellules.

2. Bloc-batterie (10) selon la revendication 1, dans lequel la pluralité de cellules (120) de batterie sont empilées dans des directions avant et arrière et couplées les unes aux autres par l'intermédiaire d'un élément adhésif (T) prévu respectivement entre les cellules (120) de batterie.

3. Bloc-batterie (10) selon la revendication 1 ou la revendication 2, dans lequel la paire de rails de guidage (220) sont formés pour s'étendre le long de directions avant et arrière de l'ensemble (100) de cellules sur le cadre (210) de plancher.

4. Bloc-batterie (10) selon l'une quelconque des revendications 1 à 3, dans lequel la pluralité de barres omnibus (320) sont disposées le long des directions avant et arrière de l'ensemble (100) de cellules, et
dans lequel la pluralité de blocs (310) de barre omnibus sont prévus le long des directions avant et arrière de l'ensemble (100) de cellules sur le rail de guidage (220).

5. Bloc-batterie (10) selon l'une quelconque des revendications 1 à 4, dans lequel le bloc (310) de barre omnibus inclut :
un premier bloc (312) ;
un deuxième bloc (314) disposé de façon à faire face au premier bloc (312) dans les directions avant et arrière de l'ensemble (100) de cellules ; et
un élément de pression (316) disposé entre le premier bloc (312) et le deuxième bloc (314) dans les directions avant et arrière de l'ensemble (100) de cellules et configuré pour être entraîné dans des directions supérieure et inférieure pour presser le premier bloc (312) et le deuxième bloc (314) dans les directions avant et arrière de l'ensemble (100) de cellules,
dans lequel des extrémités inférieures du premier bloc (312), du deuxième bloc (314) et de l'élément de pression (316) sont situées à l'intérieur du rail de guidage (220).

6. Bloc-batterie (10) selon la revendication 5, dans lequel l'élément de pression (316) inclut :
une partie mobile verticale (3162) configurée pour se déplacer dans les directions supérieure et inférieure ; et
une partie conique (3164) couplée à une surface circonférentielle externe de la partie mobile verticale (3162) et formée pour présenter une forme conique dans une direction vers le bas,
dans lequel la partie conique (3164) est déplacée dans les directions supérieure et inférieure conjointement avec la partie mobile verticale (3162) pour presser le premier bloc (312) et le deuxième bloc (314) dans les directions avant et arrière de l'ensemble (100) de cellules.

7. Bloc-batterie (10) selon la revendication 6, dans lequel l'élément de pression (316) inclut en outre une partie (3166) de fixation de bloc de barre omnibus située à l'intérieur du rail de guidage (220), reliée à la partie mobile verticale (3162) et disposée entre une extrémité inférieure du premier bloc (312) et une extrémité inférieure du deuxième bloc (314) dans les directions avant et arrière de l'ensemble (100) de cellules, et
dans lequel la partie (3166) de fixation de bloc de barre omnibus est fixée à la partie mobile verticale (3162) pour fixer le bloc (310) de barre omnibus au rail de guidage (220).

8. Bloc-batterie (10) selon l'une quelconque des revendications 1 à 7,
dans lequel la barre omnibus (320) est configurée pour entourer une partie du bloc (310) de barre omnibus et être reliée au fil (140) d'électrode en étant pressée dans les directions avant et arrière de l'ensemble (100) de cellules selon le mouvement du premier bloc (312) et du deuxième bloc (314).

9. Bloc-batterie (10) selon la revendication 8, dans lequel la barre omnibus (320) inclut :
une portion d'appui (322) disposée sur le dessus du bloc (310) de barre omnibus ; et
des parties (324) de liaison de fils formées pour s'étendre vers le bas depuis les deux extrémités dans les directions avant et arrière de la portion d'appui (322) et disposées adjacentes à des surfaces avant et arrière du premier bloc (312) et du deuxième bloc (314),
dans lequel les parties de liaison de fils sont configurées pour être reliées aux fils (140) d'électrode de la pluralité de cellules (120) de batterie en étant pressées à la fois sur les côtés avant et arrière de l'ensemble (100) de cellules selon le mouvement du premier bloc (312) et du deuxième bloc (314) par la mise sous pression de la partie conique (3164).

10. Bloc-batterie (10) selon l'une quelconque des revendications 1 à 9, comprenant en outre une paire de plaques latérales (500) qui relient la paire de parties (400) de support de cellules dans les directions avant et arrière de l'ensemble (100) de cellules et sont disposées de façon à se faire face dans des directions gauche et droite de l'ensemble (100) de cellules.

11. Bloc-batterie (10) selon l'une quelconque des revendications 1 à 10, comprenant en outre un élément (600) de dissipation de chaleur disposé entre l'ensemble (100) de cellules et le cadre (210) de plancher dans des directions supérieure et inférieure.

12. Véhicule comprenant au moins un bloc-batterie (10) selon l'une quelconque des revendications 1 à 11.
